# EUROPEAN PATENT SPECIFICATION

(11) **EP 1 914 975 B1**
(45) Date of publication and mention of the grant of the patent: **07.12.2011**
(21) Application number: 07019083.0
(22) Date of filing: 27.09.2007
(51) Int. Cl.: H04N 1/00, H04N 1/333

(54) **Communication system, communication method, and communication terminal device**
Kommunikationssystem, Kommunikationsverfahren und Kommunikationsendgerät
Système de communication, procédé de communication et terminal de communication

(30) Priority: 16.10.2006 JP 2006281244
(43) Date of publication of application: 23.04.2008
(73) Proprietor: Murata Machinery, Ltd., 3 Minami Ochiai-cho, Kisshoin Minami-ku, Kyoto-shi, Kyoto (JP)
(72) Inventor: Kimoto, Osamu, Kyoto-shi Kyoto 612-8686 (JP)
(74) Representative: Schoppe, Fritz

(56) References cited:
- EP-A- 0 892 547
- WO-A-2004/006463
- JP-A- 2003 259 099
- "Echo suppressors; G.164 (11/88)" ITU-T STANDARD IN FORCE (I), INTERNATIONAL TELECOMMUNICATION UNION, GENEVA,, CH, no. G164 11/88, 25 November 1988 (1988-11-25), XP017400685

## Description

### BACKGROUND OF THE INVENTION

### 1. Field of the Invention

The present invention relates to a technique of suppressing communication errors in a communication between a communication terminal device having a communication function of the International Telecommunications Union - Telecommunication standardization sector (ITU-T) recommendation V.34 communication mode and a communication terminal device not having a communication function of the ITU-T recommendation V.34 communication mode.

### 2. Description of the Related Art

In communication terminal devices such as facsimile, a so-called Group 3 (G3) machine that complies with the ITU-T recommendation V.29 (maximum communication speed: 9,600bps) communication mode has conventionally been put to practical use. In recent years, a so-called Super G3 (SG3) machine that complies with the V. 34 (maximum communication speed: 33. 6kbps) communication mode of increased maximum communication speed and that also responds to V.29 communication mode has been proposed.

In such SG3 machine, a start-up procedure by the ITU-T recommendation V.8 is performed before starting the procedures of V.34. The SG3 machine sends a Modified answer tone (ANSam) signal, which is a phase inverted signal of 2,100Hz, in time of incoming call. The ANSam signal itself is a signal defined in V.8. If the communication function of the V.34 communication mode is turned OFF, the transmission side device cannot detect the ANSam signal, and thus cannot respond to the ANSam signal even if the transmission side device is the G3 machine or the SG3 machine. In this case, the SG3 machine or a reception side device stops sending the ANSam signal and sends a Digital Identification Signal (DIS), which is a procedure signal of the G3 machine. The transmission side device responds to such DIS, whereby the communication between the relevant devices is continuously executed.

When executing the communication through an Internet Protocol (IP) network, an echo canceller function might turn OFF (disabled state) when a gateway detects the ANSam signal used in the V.34 communication mode since a full duplex method is adopted in the V.34 communication mode. If communication of lower than or equal to the V.29 (maximum communication speed: 9,600 kbps) communication mode is performed with the echo canceller function turned OFF, a termination flag of a Frequency Shift Keying (FSK) signal sent from the reception side device may be mistakenly recognized as a FSK signal sent from the transmission side device in the procedure of high-low speed identification of the reception side device. Due to such mistaken recognition, the reception side device will be in the low-speed stand-by state, and thus cannot receive an original high-speed image signal when such signal comes in, whereby time-out of FSK signal standby occurs and communication errors occur. Thus, communication error tends to easily occur when switching from the FSK signal to the high speed image signal.

The echo canceller function that is once turned OFF can be returned to the ON state (enabled state) by creating a silent state of 250 ms ± 150 ms (see "Echo Suppressors; G. 164 (11/88)" ITU-T Standard in force (I), International Telecommunication Unit, No. G. 164 11/88, 25.11.1988). Therefore, a communication terminal device having the ITU-T recommendation V. 34 communication mode is proposed, which when detecting the DIS after detecting the ANSam from the reception side device in time of issuing a call, does not respond to the relevant DIS, but detects the next DIS and sends a predetermined response signal, specifically, Digital Command signal (DCS) (see e.g. WO 2004/006463 A1).

JP-A-2003-259099 discloses a facsimile machine with a fax modem having functions of the V.34 communication mode. A main control section when receiving a call checks the facsimile number of an opposite party by referring to an opposite party's IP network check table in a RAM, and if the control section finds that the opposite party is connected through the IP network the control section calls the opposite party. When detecting a DIS signal after detecting an ANSam signal, the control section does not respond to the detected DIS signal but detects the next DIS signal and transmits a DCS signal being a response signal.

EP-A- 892 547 discloses a communication apparatus capable of communicating in accordance with a predetermined protocol, when receiving a DIS without receiving an ANSam signal, or not receiving a CM signal within a predetermined period after transmission of the ANSam signal. With a line connection established, when a calling station receives a DIS without receiving the ANSam signal, the calling station sends a DCS signal or an NSS and then executes the protocol according to Recommendation T.30.

In the prior art, the transmission side device does not respond to the DIS detected after detecting the ANSam signal from the reception side device, but sends the DCS with respect to the next DIS. The silent time is thereby created on a communication line, and the echo canceller function can be returned to the ON state.

However, the transmission side device sometimes sends a call Menu (CM) signal, which is a predetermined response signal with respect to the ANSam signal, with a delay with respect to the relevant ANSam signal from the reception side device. In this case, the delayed CM signal will exist on the IP network even if waiting for a predetermined time in the reception side device, and a silent state sufficient for the echo canceller function to return to the enabled state cannot be created. Therefore, when the echo canceller function is turned OFF, the communication is executed in such state, and communication errors may occur.

### BRIEF SUMMARY OF THE INVENTION

It is an object of the present invention to provide a technique capable of executing the communication without producing communication errors even if the response signal with respect to the ANSam signal is sent with a delay.

This object is achieved by a system of claim 1, a method of claim 5 and a terminal of claim 8.

A first aspect of the present invention relates to a communication system for performing a communication between a transmission side device which cannot implement a communication function of an ITU-T recommendation V.34 communication mode and a reception side device which can implement the communication function of the ITU-T recommendation V.34 communication mode; wherein the reception side device includes a communication unit for transmitting and receiving a signal, and a control unit for controlling the communication unit; and when the communication unit receives a calling signal indicating the transmission side device is requesting for communication with the reception side device, the control unit sends an ANSam signal to the transmission side device from the communication unit and sends a DIS signal to the transmission side device from the communication unit after a silent state from termination of sending the ANSam signal continues for a predetermined time on a communication line with the transmission side device.

A second aspect of the present invention relates to a communication method performed between a transmission side device which cannot implement a communication function of an ITU-T recommendation V.34 communication mode and a reception side device which can implement the communication function of the ITU-T recommendation V. 34 communication mode; the method including a first step in which the reception side device receives a calling signal indicating request for communication from the transmission side device; a second step in which the reception side device sends an ANSam signal after the first step; a third step in which the reception side device measures a time a silent state on a communication line with the transmission side device continues from a termination of sending the ANSam signal in the second step; and a fourth step in which the reception side device sends a DIS signal when the measured time exceeds a predetermined time.

A third aspect relates to a communication terminal device which can implement a communication function of an ITU-T recommendation V. 34 communication mode; the communication terminal device including a communication unit for transmitting and receiving a signal; and a control unit for controlling the communication unit; wherein when the communication unit receives a calling signal, the control unit sends an ANSam signal from the communication unit and sends a DIS signal from the communication unit after a silent state from termination of sending the ANSam signal continues for a predetermined time on a communication line.

According to such aspects, when a silent state continues for a predetermined time in a communication line with the transmission side device, the reception side devices sends the DIS, thereby reliably returning the echo canceller function to the enabled state. Therefore, the communication can be executed without producing communication errors.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a configuration example of a communication system of the present invention;

Fig. 2 is a flowchart illustrating operations of a control unit; and

Fig. 3 is a flowchart illustrating operations in a communication system according to the present invention.

### DETAILED DESCRIPTION OF PREFERRED EMBODIMENTS

A communication system and a communication method by a facsimile device will now be described based on the drawings as one example of a communication system, a communication method, and a communication device according to the embodiment of the present invention.

### <Configuration of Device>

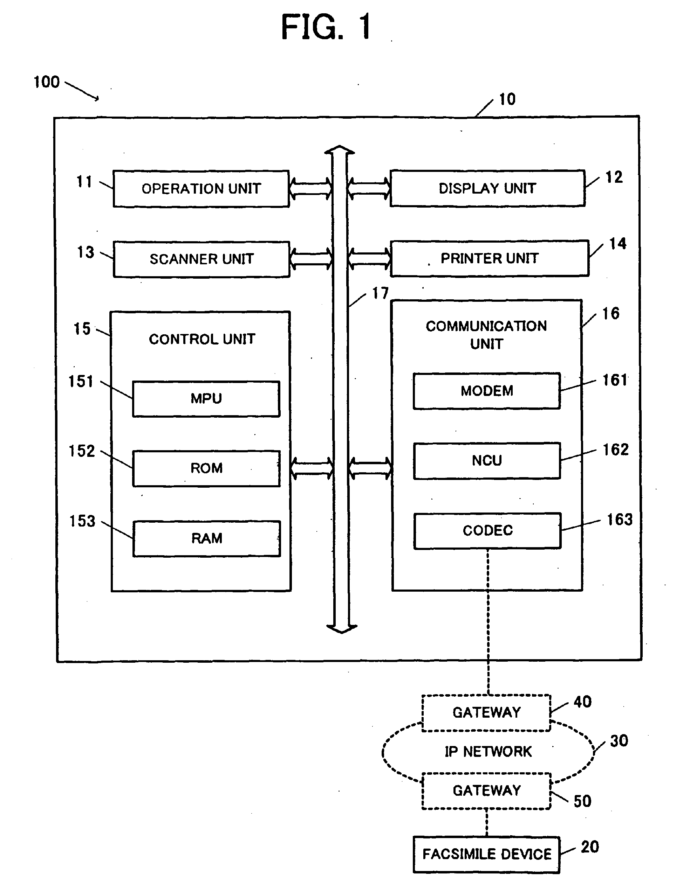

Fig. 1 is a block diagram illustrating a configuration example of a communication system 100 according to an embodiment of the present invention.

A facsimile device 10 corresponds to a reception side device in a communication system and a communication method of the present invention, and includes an operation unit 11, a display unit 12, a scanner unit 13, a printer unit 14, a control unit 15, and a communication unit 16, which units are connected to each other by way of a bus 17. The facsimile device 10 has a facsimile function of transmitting and receiving image data with another facsimile device 20 at a remote location by way of an IP (Internet Protocol) network 30, and gateways 40, 50. The facsimile device 20 corresponds to the reception side device in the communication system and the communication method of the present invention.

The operation unit 11 is configured by a mechanical switch, and accepts operations from a user such as outgoing correspondence and data input, execution instructions of various commands, and the like. The display unit 12 is configured by a display device such as Liquid Crystal Display (LCD), and displays various information. A touch screen may be applied to the display unit 12 to also be provided with the function of a part of or all of the operation unit 11. The scanner unit 13 optically scans a transmitting document by Charged Coupled Device (CCD), and the like, and generates image data. The printer unit 14 includes an image memory (not illustrated) for storing image data, and prints the image data stored in the image memory on a recording paper placed in a recording paper cassette (not illustrated).

The control unit 15 includes a Micro Processing Unit (MPU) 151, a Read Only Memory (ROM) 152, and a Random Access Memory (RAM) 153. The MPU 151 realizes each function of the facsimile device 10 by performing control of input signal from the operation unit 11, data computation based on the input signal and generation of output signal, and display content on the display unit 12. The ROM 152 is stored with data necessary for program and control executed by the MPU 151, and the RAM 153 temporarily stores data necessary for integrated control by the MPU 151. Various functions of the facsimile device 10 are thereby realized. The function for the control unit 15 to control each component will be described later in detail.

The communication unit 16 includes a Modulator-Demodulator (MODEM) 161 having a communication function of the ITU-T recommendation V.34 communication mode, a Network Control Unit (NCU) 162, and a Coder-decoder (CODEC) 163. The communication unit 16 performs transmission and reception of data with the other facsimile device 20 connected by way of gateways 40, 50, which are connected to the IP network 30, by control from the MPU 151. The facsimile device 10 is a SG3 machine having a communication function of the ITU-T recommendation V.34 communication mode, and is assumed to also have the facsimile communication function of the conventional G3 method and the like. The IP network 30 is connected not only to the gateways 40, 50, but is also connected to other gateways, whereby the facsimile device 10 is communicable with other facsimile devices although the illustration thereof is omitted.

In the present embodiment, the facsimile device 20 is assumed to be a G3 machine that cannot execute the communication function of the ITU-T recommendation V.34 communication mode.

### <Detailed function of control unit>

The control unit 15 sends an ANSam signal to the facsimile device 20 from the communication unit 16 when a calling tone (CNG) signal indicating that the facsimile device 20 is requesting for communication with the facsimile device 10 is received by the communication unit 16. After the silent state from the termination of sending the ANSam signal continues for a predetermined time in the communication line with the facsimile device 20, the DIS is sent from the communication unit 16 to the facsimile device 20.

Specifically, when the CNG signal from the facsimile device 20 is received via the IP network 30 and the gateways 40, 50, the control unit 15 performs a control to send the ANSam signal from the communication unit 16. At the same time, the control unit 15 sends the DIS to the facsimile device 20 from the communication unit 16 after the silent state from the termination of sending the ANSam signal is continued for a predetermined time in the communication line with the facsimile device 20. The predetermined time of the silent state to be continued is desirably greater than or equal to 400 ms. The predetermined time of the silent state to be continued is more desirably less than or equal to 500 ms.

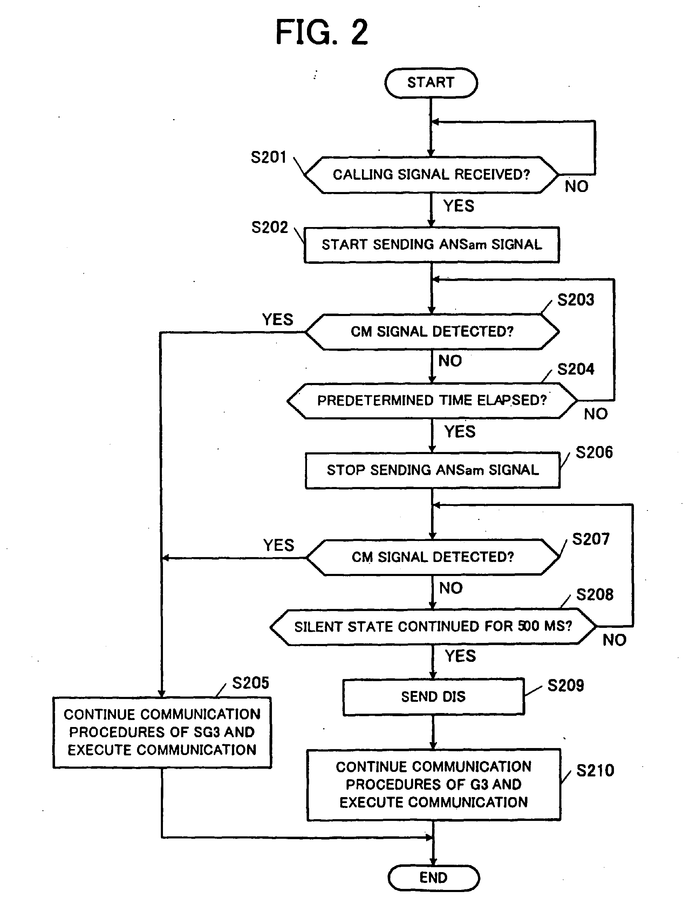

Fig. 2 is a flowchart illustrating operations of the control unit 15. First, the control unit 15 waits until the communication unit 16 receives the CNG signal indicating that the facsimile device 20 is requesting for communication with the facsimile device 10 (step S201). When receiving the CNG signal, Yes is selected in step S201, and the control unit 15 performs a control to start sending the ANSam signal to the facsimile device 20 from the communication unit 16 (step S202).

The control unit 15 starts sending the ANSam signal in step S202, and at the same time, determines whether or not an enabled signal, specifically, the CM signal from the facsimile device 20 is detected (step S203), and determines whether or not a predetermined time for sending the ANSam signal has elapsed (step S204).

If the facsimile device 20 can implement the communication function of the V.34 communication mode, the facsimile device 20, which is assumed to be the transmission side device, sends the CM signal with respect to the ANSam signal from the facsimile device 10. Therefore, the control unit 15 detects the CM signal in step S203, and continues the communication procedure of SG3 and executes the communication (step S205).

If the facsimile device 20 cannot implement the communication function of the V.34 communication mode, the ANSam signal cannot be detected. Therefore, the CM signal is not detected in step S203. After a predetermined time for sending the ANSam signal has elapsed, the control unit 15 stops sending the ANSam signal (step S206).

The control unit 15 then detects whether or not a signal energy, specifically, the CM signal is present in the communication line between the facsimile device 10 and the facsimile device 20, where if the CM signal is present, YES is selected in step S207, and the process of step S205 is executed. This is the process when the response of the CM signal with respect to the ANSam signal is delayed although the facsimile device 20 can implement the communication function of the V.34 communication mode.

Thereafter, the control unit 15 determines whether or not the silent state from the termination of sending the ANSam signal has continued for 250 ms ± 150 ms, specifically, 500 ms (step S208) . If the silent state continued for 500 ms, YES is selected in step S208, and the control unit 15 sends the DIS to the facsimile device 20 from the communication unit 16 (step S209). Thereafter, the control unit 15 continues the communication procedures of the G3 and executes the communication (step S210).

### <Communication system 100>

A communication system 100 applied with the facsimile device 10 and the facsimile device 20 will now be described.

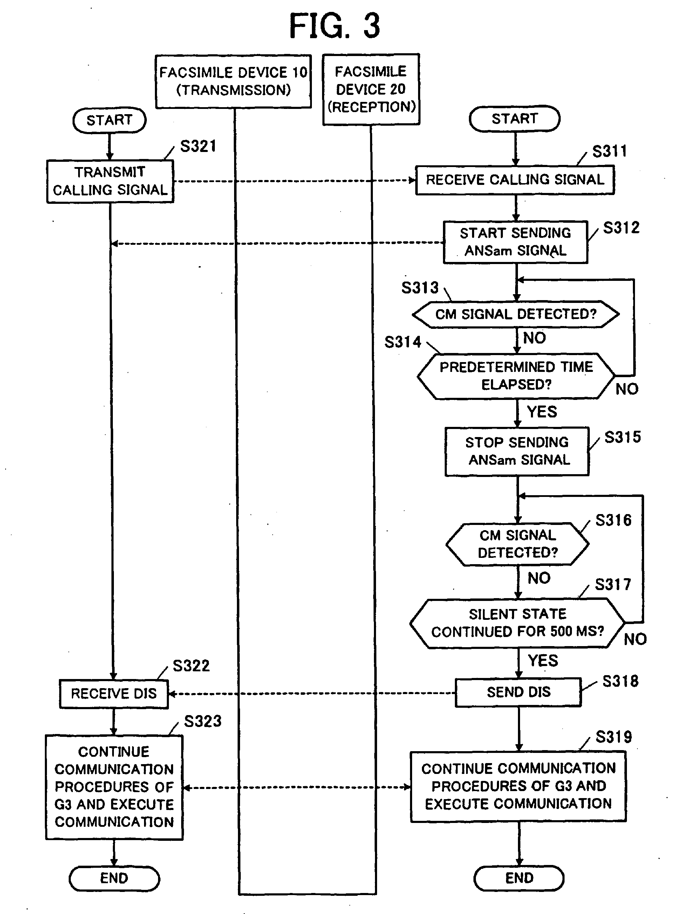

Fig. 3 is a flowchart illustrating processing operations in the communication system 100 of the present invention. In this flowchart, a flowchart (steps S311 to S319) for the processing operations of the facsimile device 10 and a flowchart (steps S321 to S323) for the operations of the facsimile device 20 are shown in association with each other.

Only the operation for returning the echo canceller function to the ON state is shown in Fig. 3, and illustration and description of other operations will be omitted. Unless specifically described, a series of operations (steps S311 to S319) in the facsimile device 10 are automatically performed under the control of the control unit 15, and a series of operations (steps S321 to S323) in the facsimile device 20 are automatically performed under a control unit (not illustrated) of the facsimile device 20.

When the user of the facsimile device 20 inputs a telephone number of the facsimile device 10, the facsimile device 20 transmits the CNG signal indicating request for communication with the facsimile device 10 (step S321). In response thereto, the facsimile device 10 receives the CNG signal (step S311).

When receiving the CNG signal from the facsimile device 20 in step S311, the control unit 15 of the facsimile device 10 starts sending the ANSam signal to the facsimile device 20 (step S312).

The control unit 15 starts sending the ANSam signal in step S312, and at the same time, determines whether or not the CM signal from the facsimile device 20 has been detected (step S313), and determines whether or not a predetermined time for sending the ANSam signal has elapsed (step S314). In the present embodiment, the facsimile device 20 is a G3 machine, and thus the facsimile device 20 cannot detect the ANSam signal. Therefore, the facsimile device 20 does not send the CM signal, and the facsimile device 10 does not detect the CM signal. No is thus selected in step S313.

When Yes is selected in step S314 (i.e., predetermined time for sending the ANSam signal has elapsed), the control unit 15 stops sending the ANSam signal (step S315).

The control unit 15 then detects whether or not the CM signal is present on the communication line between the facsimile devices 10, 20 (step S316) . Since the facsimile device 20 does not send the CM signal, No is selected in step S316.

The control unit 15 then determines whether or not the silent state from the termination of sending the ANSam signal has continued for 250 ms ± 150 ms, specifically, 500 ms (step S317). If the silent state continued for 500 ms, YES is selected in step S317, and the control unit 15 sends the DIS to the facsimile device 20 from the communication unit 16 (step S318).

When the DIS sent in step S318 is received by the facsimile device 20 (step S322), the facsimile devices 10, 20 respectively continue the communication procedures of G3 and execute the communication (step S319, S323), and then terminate the communication.

Therefore, since the DIS is sent when the silent state continues for a predetermined time in the communication line with the facsimile device 20, the silent state is reliably obtained for a predetermined time in the communication line after the ANSam signal is sent. Therefore, even if the gateways 40, 50 having a function of disabling the echo canceller function are present on the network, for example, the echo canceller function disabled by the ANSam signal is reliably returned to the enabled state. In particular, the echo canceller function is reliably returned to the enabled state even if the CM signal is sent with a delay with respect to the ANSam signal from the facsimile device 20 or the transmission side device. Therefore, communication can be executed without producing communication errors.

Since the DIS is sent after the silent state continues for greater than or equal to 400 ms, the echo canceller function is reliably returned to the enabled state.

Furthermore, since the sending of the DIS is not delayed by longer than 500 ms, the communication does not need to be stopped more than necessary, and communication can be rapidly executed.

Moreover, since the DIS signal is sent after the silent state has continued for a predetermined time in the communication line between the facsimile device 20 and the facsimile device 10, the echo canceller function is reliably returned to the enabled state. Therefore, communication is executed without producing communication errors.

### <Variant>

The embodiment of the present invention has been described, but the present invention is not limited to the content described above.

For instance, the facsimile device 20 is a G3 machine that can not implement the communication function of the ITU-T recommendation V.34 communication mode in the above embodiment, but may be a facsimile device provided with a function serving as the G3 machine and a function serving as the SG3 machine so as to be able to select either function. In this case, if the function serving as the SG3 machine is selected, the communication is executed in the communication procedures of the SG3, and if the function serving as the G3 machine is selected, the communication is executed in the communication procedures of G3 according to the method described above.

The facsimile device 10, which is the communication terminal device, of the above descried embodiment is a device capable of transmitting and receiving image data, but may be a communication terminal device capable of only receiving the image data, or may be a multifunctional peripheral (MFP) having a plurality of functions such as scan function and print function in addition to the facsimile function.

## Claims

1. A communication system for performing a communication between a transmission side device (10) which cannot execute a communication function of an ITU-T recommendation V.34 communication mode and a reception side device (20) which can execute the communication function of the ITU-T recommendation V. 34 communication mode;
wherein the reception side device (20) includes a communication unit (16) for transmitting and receiving a signal, and a control unit (15) for controlling the communication unit (16); and
wherein, when the communication unit (16) receives a calling signal indicating the transmission side device (10) is requesting for communication with the reception side device (20), the control unit (15) sends an ANSam signal to the transmission side device (10) from the communication unit (16) and sends a DIS signal to the transmission side device (10) from the communication unit (16);
**characterized in that**
the control unit (15) sends the DIS signal to the transmission side device (10) from the communication unit (16) after a silent state from a termination of sending the ANSam signal continues for a predetermined time on a communication line with the transmission side device (10).

2. The communication system according to claim 2, further comprising:
gateways (40, 50) interposed between the transmission side device (10) and the reception side device (20); and
an echo canceller that is arranged in the gateway (40, 50) and that operates when the silent time continues.

3. The communication system according to claim 1, wherein the predetermined time is not less than 400 ms.

4. The communication system according to claim 3, wherein the predetermined time is not more than 500 ms.

5. A communication method performed between a transmission side device (10) not executing a communication function of an ITU-T recommendation V.34 communication mode and a reception side device (20) executing the communication function of the ITU-T recommendation V.34 communication mode; the method comprising:
a first step (S311) in which the reception side device (20) receives a calling signal indicating request for communication from the transmission side device (10);
a second step (S312) in which the reception side device (20) sends an ANSam signal after the first step (S311);
a third step (S317) in which the reception side device (20) measures a time a silent state continues after the second step (S312); and
a fourth step (S318) in which the reception side device (20) sends a DIS signal when the time measured in the third step (S317) exceeds a predetermined time;
**characterized in that**
in the third step the time a silent state on a communication line with the transmission side device (10) continues from a termination of sending the ANSam signal in the second step is measured.

6. The communication method according to claim 5, wherein the predetermined time of the fourth step (S318) is not less than 400 ms.

7. The communication method according to claim 6, wherein the predetermined time of the fourth step (S318) is not more than 500 ms.

8. A communication terminal device executing a communication function of an ITU-T recommendation V.34 communication mode; the communication terminal device comprising:
a communication unit (16) for transmitting and receiving a signal; and
a control unit (15) for controlling the communication unit (16);
wherein, when the communication unit (16) receives a calling signal, the control unit (15) sends an ANSam signal from the communication unit (16) and sends a DIS signal from the communication unit (16);
**characterized in that**
the control unit (15) sends the DIS signal from the communication unit (16) after a silent state from a termination of sending the ANSam signal continues for a predetermined time on a communication line.

9. The communication terminal device according to claim 8, wherein the predetermined time is not less than 400 ms.

10. The communication terminal device according to claim 9, wherein the predetermined time is not more than 500 ms.

## Patentansprüche

1. Ein Kommunikationssystem zum Durchführen einer Kommunikation zwischen einer sendeseitigen Vorrichtung (10), die keine Kommunikationsfunktion eines Kommunikationsmodus der ITU-T-Empfehlung V.34 ausführen kann, und einer empfangsseitigen Vorrichtung (20), die die Kommunikationsfunktion des Kommunikationsmodus der ITU-T-Empfehlung V.34 ausführen kann;
wobei die empfangsseitige Vorrichtung (20) eine Kommunikationseinheit (16) zum Senden und Empfangen eines Signals und eine Steuereinheit (15) zum Steuern der Kommunikationseinheit (16) aufweist; und
wobei die Steuereinheit (15) dann, wenn die Kommunikationseinheit (16) ein Anrufsignal empfängt, das angibt, dass die sendeseitige Vorrichtung (10) eine Kommunikation mit der empfangsseitigen Vorrichtung (20) anfordert, ein ANSam-Signal von der Kommunikationseinheit (16) an die sendeseitige Vorrichtung (10) sendet und ein DIS-Signal von der Kommunikationseinheit (16) an die sendeseitige Vorrichtung (10) sendet;
**dadurch gekennzeichnet, dass**
die Steuereinheit (15) das DIS-Signal von der Kommunikationseinheit (16) an die sendeseitige Vorrichtung (10) sendet, nachdem ein Ruhezustand ab einer Beendigung des Sendens des ANSam-Signals über eine vorbestimmte Zeit hinweg auf einer Kommunikationsleitung mit der sendeseitigen Vorrichtung (10) andauert.

2. Das Kommunikationssystem gemäß Anspruch 2, das ferner folgende Merkmale aufweist:
Netzübergänge (40, 50), die zwischen der sendeseitigen Vorrichtung (10) und der empfangsseitigen Vorrichtung (20) angeordnet sind; und
einen Echokompensator, der in dem Netzübergang (40, 50) angeordnet ist und der arbeitet, wenn die Ruhezeit fortdauert.

3. Das Kommunikationssystem gemäß Anspruch 1, bei dem die vorbestimmte Zeit nicht weniger als 400 ms beträgt.

4. Das Kommunikationssystem gemäß Anspruch 3, bei dem die vorbestimmte Zeit nicht mehr als 500 ms beträgt.

5. Ein Kommunikationsverfahren, das zwischen einer sendeseitigen Vorrichtung (10), die keine Kommunikationsfunktion eines Kommunikationsmodus der ITU-T-Empfehlung V.34 ausführt, und einer empfangsseitigen Vorrichtung (20), die die Kommunikationsfunktion des Kommunikationsmodus der ITU-T-Empfehlung V.34 ausführt, durchgeführt wird; wobei das Verfahren folgende Schritte aufweist:
einen ersten Schritt (S311), bei dem die empfangsseitige Vorrichtung (20) ein Anrufsignal empfängt, das eine Anforderung einer Kommunikation von der sendeseitigen Vorrichtung (10) angibt;
einen zweiten Schritt (S312), bei dem die empfangsseitige Vorrichtung (20) nach dem ersten Schritt (S311) ein ANSam-Signal sendet;
einen dritten Schritt (S317), bei dem die empfangsseitige Vorrichtung (20) nach dem zweiten Schritt (S312) eine Zeit misst, während derer ein Ruhezustand fortdauert; und
einen vierten Schritt (S318), bei dem die empfangsseitige Vorrichtung (20) ein DIS-Signal sendet, wenn die bei dem dritten Schritt (S317) gemessene Zeit eine vorbestimmte Zeit überschreitet;
**dadurch gekennzeichnet, dass**
bei dem dritten Schritt die Zeit gemessen wird, während derer ein Ruhezustand auf einer Kommunikationsleitung mit der sendeseitigen Vorrichtung (10) ab einer Beendigung des Sendens des ANSam-Signals bei dem zweiten Schritt fortdauert.

6. Das Kommunikationsverfahren gemäß Anspruch 5, bei dem die vorbestimmte Zeit des vierten Schritts (S318) nicht weniger als 400 ms beträgt.

7. Das Kommunikationsverfahren gemäß Anspruch 6, bei dem die vorbestimmte Zeit des vierten Schritts (S318) nicht mehr als 500 ms beträgt.

8. Ein Kommunikationsendgerät, das eine Kommunikationsfunktion eines Kommunikationsmodus der ITU-T-Empfehlung V.34 ausführt; wobei das Kommunikationsendgerät folgende Merkmale aufweist:
eine Kommunikationseinheit (16) zum Senden und Empfangen eines Signals; und
eine Steuereinheit (15) zum Steuern der Kommunikationseinheit (16);
wobei die Steuereinheit (15) dann, wenn die Kommunikationseinheit (16) ein Anrufsignal empfängt, ein ANSam-Signal von der Kommunikationseinheit (16) sendet und ein DIS-Signal von der Kommunikationseinheit (16) sendet;
**dadurch gekennzeichnet, dass**
die Steuereinheit (15) das DIS-Signal von der Kommunikationseinheit (16) sendet, nachdem ein Ruhezustand ab einer Beendigung des Sendens des ANSam-Signals über eine vorbestimmte Zeit auf einer Kommunikationsleitung fortdauert.

9. Das Kommunikationsendgerät gemäß Anspruch 8, bei dem die vorbestimmte Zeit nicht weniger als 400 ms beträgt.

10. Das Kommunikationsendgerät gemäß Anspruch 9, bei dem die vorbestimmte Zeit nicht mehr als 500 ms beträgt.

## Revendications

1. Système de communication pour effectuer une communication entre un dispositif du côté émission (10) qui ne peut pas réaliser une fonction de communication d'un mode de communication V.34 selon la recommandation ITU-T et un dispositif du côté réception (20) qui peut réaliser la fonction de communication du mode de communication V.34 selon la recommandation ITU-T;
dans lequel le dispositif du côté réception (20) comprend une unité de communication (16) destinée à émettre et recevoir un signal, et une unité de commande (15) destinée à commander l'unité de communication (16); et
dans lequel, lorsque l'unité de communication (16) reçoit un signal d'appel indiquant que le dispositif du côté émission (10) effectue une demande de communication avec le dispositif du côté réception (20), l'unité de commande (15) envoie un signal ANSam au dispositif du côté émission (10) de l'unité de communication (16) et envoie un signal DIS au dispositif du côté émission (10) de l'unité de communication (16);
**caractérisé par le fait que**
l'unité de commande (15) envoie le signal DIS au dispositif du côté émission (10) de l'unité de communication (16) après qu'un état de silence à partir d'une fin d'envoi du signal ANSam continue pendant un temps prédéterminé sur une ligne de communication avec le dispositif du côté émission (10).

2. Système de communication selon la revendication 2, comprenant par ailleurs:
des passerelles (40, 50) interposées entre le dispositif du côté émission (10) et le dispositif du côté réception (20); et
un annuleur d'écho qui est disposé dans la passerelle (40, 50) et qui fonctionne lorsque le temps de silence continue.

3. Système de communication selon la revendication 1, dans lequel le temps prédéterminé n'est pas inférieur à 400 ms.

4. Système de communication selon la revendication 3, dans lequel le temps prédéterminé n'est pas supérieur à 500 ms.

5. Procédé de communication effectué entre un dispositif du côté émission (10) ne réalisant pas de fonction de communication d'un mode de communication V.34 selon la recommandation ITU-T et un dispositif du côté réception (20) réalisant la fonction de communication du mode de communication V.34 selon la recommandation ITU-T; le procédé comprenant:
une première étape (S311) dans laquelle le dispositif du côté réception (20) reçoit un signal d'appel indiquant une demande de communication du dispositif du côté émission (10);
une deuxième étape (S312) dans laquelle le dispositif du côté réception (20) envoie un signal ANSam après la première étape (S311);
une troisième étape (S317) dans laquelle le dispositif du côté réception (20) mesure un temps pendant lequel un état de silence continue après la deuxième étape (S312); et
une quatrième étape (S318) dans laquelle le dispositif du côté réception (20) envoie un signal DIS lorsque le temps mesuré dans la troisième étape (S317) excède un temps prédéterminé;
**caractérisé par le fait que**
à la troisième étape est mesuré le temps pendant lequel un état de silence sur une ligne de communication avec le dispositif du côté émission (10) continue à partir d'une fin d'envoi du signal ANSam à la deuxième étape.

6. Procédé de communication selon la revendication 5, dans lequel le temps prédéterminé de la quatrième étape (S318) n'est pas inférieur à 400 ms.

7. Procédé de communication selon la revendication 6, dans lequel le temps prédéterminé de la quatrième étape (S318) n'est pas supérieur à 500 ms.

8. Dispositif de terminal de communication réalisant une fonction de communication d'un mode de communication V.34 selon la recommandation ITU-T; le dispositif de terminal de communication comprenant:
une unité de communication (16) destinée à émettre et recevoir un signal; et
une unité de commande (15) destinée à commander l'unité de communication (16);
dans lequel, lorsque l'unité de communication (16) reçoit un signal d'appel, l'unité de commande (15) envoie un signal ANSam de l'unité de communication (16) et envoie un signal DIS de l'unité de communication (16);
**caractérisé par le fait que**
l'unité de commande (15) envoie le signal DIS de l'unité de communication (16) après qu'un état de silence à partir d'une fin d'envoi du signal ANSam continue pendant un temps prédéterminé sur une ligne de communication.

9. Dispositif de terminal de communication selon la revendication 8, dans lequel le temps prédéterminé n'est pas inférieur à 400 ms.

10. Dispositif de terminal de communication selon la revendication 9, dans lequel le temps prédéterminé n'est pas supérieur à 500 ms.
